# FASCICULE DE BREVET EUROPEEN

(11) **EP 0 877 311 B1**
(45) Date de publication et mention de la délivrance du brevet: **26.03.2003**
(21) Numéro de dépôt: 98401077.7
(22) Date de dépôt: 04.05.1998
(51) Int. Cl.: G05D 23/19

(54) **Radiateur électrique à accumulation de type statique compensé et son procédé de commande**
Kompensierter statischer Elektrospeicherheizkörper und Methode zur dessen Steuerung
Electric storage heater of the compensated static type and method for controlling such a heater

(30) Priorité: 06.05.1997 FR 9705572
(43) Date de publication de la demande: 11.11.1998
(73) Titulaire: ELECTRICITE DE FRANCE, 75008 Paris (FR)
(72) Inventeur: Saint-Antonin, Hugues, 77210 Avon (FR); André, Jacques, 1410 Waterloo (BE)
(74) Mandataire: Poulin, Gérard

(56) Documents cités:
- DE-A- 2 528 097
- DE-A- 3 641 362
- GB-A- 2 265 705
- WINN R C: "APPLICATION OF OPTIMAL CONTROL THEORY TO UTILITY DEMAND MANAGEMENT" AEROSPACE POWER, SAN DIEGO, AUG 3 - 7, 1992, vol. 1, 3 août 1992, pages 1.401-1.406, XP000366035 INSTITUTE OF ELECTRICAL AND ELECTRONICS ENGINEERS

## Description

### Domaine de l'invention

L'invention concerne les radiateurs électriques à accumulation de type statique compensé. On pense, en particulier, aux appareils dont la charge du bloc accumulateur se fait de nuit pour délivrer pendant toute la journée la chaleur accumulée.

### Art antérieur et problème posé

Ce type de radiateur électrique comprend généralement un bloc accumulateur, un élément direct d'appoint et des moyens de commande de ces deux éléments. Le bloc accumulateur peut être constitué d'un noyau de briques réfractaires denses à l'intérieur duquel sont placées des résistances électriques chauffantes, le tout étant entouré d'une enveloppe isolante.

La commande de ce type de radiateur électrique à accumulation de type compensé se décompose en deux phases. La première est la charge nocturne du bloc accumulateur qui se fait en fonction de la température à l'extérieur du local, ou d'un thermostat de charge. La deuxième est la décharge statique de la chaleur accumulée, assurant ainsi le chauffage de base du local dans lequel est placé le radiateur. Lorsque le chauffage de base ne parvient pas à maintenir la consigne de température ambiante demandée par l'utilisateur, l'élément direct assure le complément d'apport de chaleur.

De manière générale, les résistances du bloc accumulateur et de l'élément direct d'appoint ont une puissance nominale qui ne varie pas en cours d'utilisation. Le pilotage de ces deux puissances est indépendant : un thermostat de charge et une sonde de température placée à l'extérieur du local pour le noyau et un thermostat d'ambiance pour l'élément direct d'appoint.

D'autre part, on utilise également des radiateurs à inertie, ayant une architecture comparable. Ils utilisent un bloc accumulateur de faible dimension pour assurer un chauffage par inertie et un élément direct pour assurer la rapidité du chauffage. Toutefois, ces radiateurs à inertie ne sont pas des appareils tarifaires et n'ont donc pas de fonctionnements spécifiques en phase diurne, ou en phase nocturne. De plus, ils n'utilisent généralement pas de sonde de température placée à l'extérieur du local dans lequel se trouve le radiateur.

Dans leur utilisation, les puissances des éléments inertiels et directs de ces radiateurs à inertie sont constantes, mais sont pilotées par une sonde de la température ambiante à l'intérieur du local.

Deux fonctionnements sont possibles pour ces radiateurs à inertie. Soit la sonde d'ambiance pilote simultanément la puissance totale du radiateur à inertie, sans distinction de l'élément direct ou de l'élément inertiel, soit un dispositif régule les deux puissances de façon distincte.

Dans ce deuxième cas, soit la mise en marche de l'élément direct et conditionné par un seuil d'écart de température entre la mesure de la température et la température de consigne demandée, par exemple 0,6°C, soit l'élément inertiel est piloté par un second thermostat mesurant la température interne du radiateur indépendamment de la température ambiante.

De manière générale, dans tous ces dispositifs, les deux éléments constituant ces derniers sont commandés indépendamment l'un de l'autre du point de vue des puissances dissipées. Il s'ensuit que ces dispositifs ne sont pas toujours très efficaces et que les puissances respectives de leurs deux éléments ne sont pas utilisées de façon optimale.

Le but de l'invention est de remédier à ces inconvénients en proposant un procédé de commande différent pour un radiateur électrique à accumulation de type statique compensé.

### Résumé de l'invention

A cet effet, le premier objet principal de l'invention est un procédé de commande d'un radiateur électrique à accumulation du type statique compensé, le radiateur comprenant :
- un bloc accumulateur constitué lui-même de :
   . un noyau de briques réfractaires denses ;
   . des résistances électriques chauffantes ; et
   . une enveloppe isolante entourant le noyau ;
- un élément direct d'appoint ; et
- des moyens de commande pour répartir la puissance électrique à fournir entre le bloc accumulateur et l'élément direct d'appoint, en fonction d'une température ambiante θ_{A} et d'une température de consigne θ_{C}.

Selon l'invention, les moyens de commande agissent selon les trois règles suivantes :
- lorsque 0 < Δθ = θ_{C} - θ_{A} < Δθₘₐₓ, Δθₘₐₓ étant un écart maximal déterminé de température, la puissance de l'élément direct d'appoint P_{EDA} = A(θ_{C} - θ_{A}), A étant une constante, la puissance du bloc accumulateur complétant la puissance de l'élément direct d'appoint pour que la puissance nominale du radiateur soit atteinte ;
- lorsque Δθₘₐₓ < Δθ = θ_{C} - θ_{A}, on demande la puissance maximale de l'élément direct d'appoint, le bloc accumulateur étant commandé pour que sa puissance complète celle de l'élément direct d'appoint, afin que la puissance nominale du radiateur soit atteinte ; et
- lorsque Δθ = θ_{C} - θ_{A} < 0, le bloc accumulateur et l'élément direct d'appoint sont coupés.

Ce procédé se complète avantageusement d'une quatrième règle concernant le cas où 0 < Δθ = θ_{C} - θ_{A} < Δθₘᵢₙ, l'élément direct d'appoint est coupé et le bloc accumulateur fonctionne à puissance maximale, Δθₘᵢₙ étant un écart minimum déterminé.

Dans une mise en oeuvre préférentielle du procédé de l'invention, la puissance maximale de l'élément direct d'appoint P_{EDAmax} est égale à 0,33 de la puissance nominale du radiateur P_{NOM}.

Dans le procédé selon l'invention, il est préférable d'alimenter le bloc accumulateur et l'élément direct d'appoint par des trains d'alternance complets permettant ainsi d'utiliser la ligne d'alimentation électrique de façon uniforme.

Le deuxième objet principal de l'invention est un radiateur pour la mise en oeuvre du procédé précédemment décrit, ce radiateur comprenant un microprocesseur en guise de moyen de commande recevant la température de consigne θ_{C} et la température ambiante θ_{A} issue d'une sonde de température, afin de commander un bloc accumulateur et un élément direct d'appoint selon le procédé précédemment cité.

### Liste des figures

L'invention et ses différentes caractéristiques seront mieux comprises à la lecture de la description suivante, d'un mode de réalisation de l'invention, accompagnée des figures qui représentent, respectivement :
- figure 1, un graphe relatif à l'utilisation de la puissance de l'élément direct d'appoint dans le procédé selon l'invention ;
- figure 2, un schéma du radiateur selon l'invention ; et
- figure 3, un ordinogramme relatif au cycle de commande dans le procédé de commande selon l'invention.

### Description détaillée d'un mode de réalisation

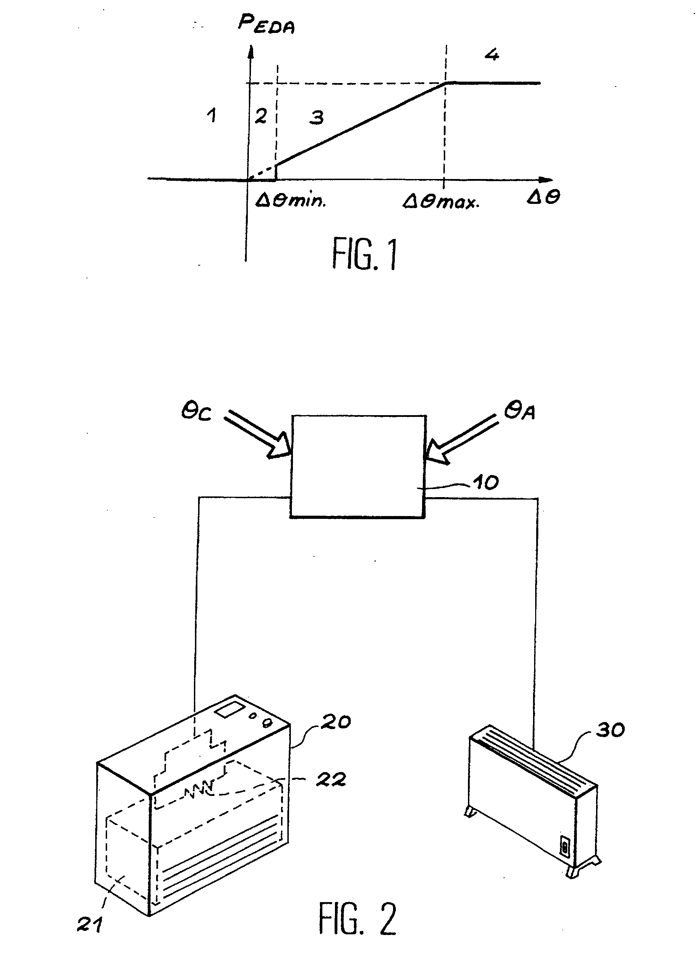

La figure 1 symbolise les quatre cas de figure relatifs à la commande de l'élément direct d'appoint du radiateur, selon le procédé de l'invention.

Sur cette figure 1, l'écart de température Δθ entre la température de consigne θ_{C} et la température ambiante θ_{A} est placé en abscisse. En ordonnée est placée la puissance de l'élément direct d'appoint P_{EDA}.

La zone, référencée 1, schématise le cas le plus simple où la température ambiante θ_{A} est supérieure à la température de consigne θ_{C}, en d'autres termes, où Δθ est négatif. Dans ce cas, aucun des deux éléments chauffants du radiateur n'est activé. La puissance dissipée est donc nulle.

La zone 2 schématise le cas où la température ambiante θ_{A} est très légèrement inférieure à la température de consigne θ_{C}, c'est-à-dire quand Δθ est inférieur à une valeur minimum déterminée Δθₘᵢₙ, par exemple 0,2°C. Dans ce cas, seul le bloc accumulateur est commandé au chauffage et est donc le seul des deux éléments chauffants à produire de la chaleur. On prévoit de le faire fonctionner à sa puissance maximale.

Dans la troisième zone, référencée 3, on se place dans le cas où l'écart Δθ entre la température de consigne θ_{C} et la température ambiante θ_{A} est compris entre deux valeurs déterminées d'écart maximal Δθₘₐₓ et minimal Δθₘᵢₙ. On peut choisir Δθₘₐₓ de l'ordre de 0,6°C. Dans ce cas, on décide d'actionner l'élément direct d'appoint en proportion à cet écart. En d'autres termes, la puissance P_{EDA} de l'élément direct d'appoint est directement proportionnel à l'écart Δθ.

P_{EDA} = A(Δθ = A(θ_{C} - θ_{A})), A étant une constante.

On complète la puissance calorifique dissipée en activant le bloc accumulateur de manière à ce que la puissance nominale du radiateur soit atteinte. En fait, la puissance de l'élément direct d'appoint P_{EDA} est inversement proportionnelle à l'écart de température Δθ. La quatrième zone, référencée 4, schématise le cas où la température ambiante θ_{A} est largement inférieure à la température de consigne θ_{C}, c'est-à-dire dans le cas où l'écart de température Δθ est supérieur à la valeur Δθₘₐₓ déterminée (par exemple 0,6°C). Dans ce cas, on fait fonctionner l'élément direct d'appoint à sa puissance maximale et on complète avec le bloc accumulateur pour que la puissance nominale du radiateur soit atteinte.

On peut éventuellement supprimer le cas schématisé par la zone 2 en choisissant la valeur minimale Δθₘᵢₙ de l'écart de température entre la température de consigne θ_{C} et la température ambiante θ_{A} égale à 0. Les cas représentés par les zones 1, 3 et 4 restant valables.

Ce procédé a pour résultat que, dans le premier cas, lorsque Δθ est inférieur à 0, le radiateur ne fonctionne pas. Lorsque Δθ est supérieure à Δθₘₐₓ, par exemple 0,6°C, comme le schématise la zone 4, la température ambiante θ_{A} étant éloignée de la température de consigne θ_{C}, l'élément direct d'appoint fonctionne à son maximum, mais ne constitue pas à lui seul la puissance nominale du radiateur. Bien au contraire, on prévoit que sa puissance maximale P_{EDAmax} soit égale à 33 % de la puissance électrique nominale du radiateur. Dans ce cas de grande différence entre la température de consigne θ_{C} et la température ambiante θ_{A}, l'élément inertiel constitué par le bloc accumulateur complète l'élément direct d'appoint pour que la puissance maximale du radiateur soit atteinte. Dans le cas où l'élément direct d'appoint représente 33 % de la puissance électrique du radiateur, l'élément inertiel fonctionne donc à 66 % de sa puissance.

Dans les cas 2 et 3, la température ambiante θ_{A} est relativement proche de la température de consigne θ_{C} et la puissance électrique fournie par l'élément direct d'appoint diminue de son maximal à 0 %, c'est-à-dire par exemple de 33 à 0 % de la puissance nominale du radiateur, ceci lorsque l'écart Δθ passe de 0,6 à 0°C. La puissance du bloc accumulateur est donc complémentaire et passe donc de 66 à 100 % de la puissance nominale du radiateur.

On remarque que dans les cas représentés par les zones 2, 3 et 4, la puissance électrique totale du radiateur reste constante.

On rappelle que dans le cas représenté par la zone 2, on interrompt le principe décrit dans le paragraphe précédent, en choisissant un écart minimal Δθₘᵢₙ de température différent de 0. Dans ce cas, on coupe carrément l'élément direct d'appoint pour que le bloc accumulateur chauffe à la puissance nominale du radiateur.

La figure 2 schématise succinctement le radiateur selon l'invention. On y distingue des moyens de commande symbolisés par un microprocesseur 10 recevant, d'une part, la température de consigne θ_{C} et, d'autre part, la température ambiante θ_{A}. Il commande, à la fois, un bloc accumulateur 20, représentant l'élément inertiel, et un convecteur 30, représentant l'élément direct d'appoint. Le bloc accumulateur est du type de ceux utilisés pour accumuler de la chaleur en phase nocturne et la restituer pendant les phases diurnes. Il est donc, de préférence, constitué d'un bloc en briques denses 21, à l'intérieur duquel se trouvent enfermées des résistances chauffantes 22. Le tout est entouré d'une enveloppe isolante, éventuellement équipée d'une armature métallique.

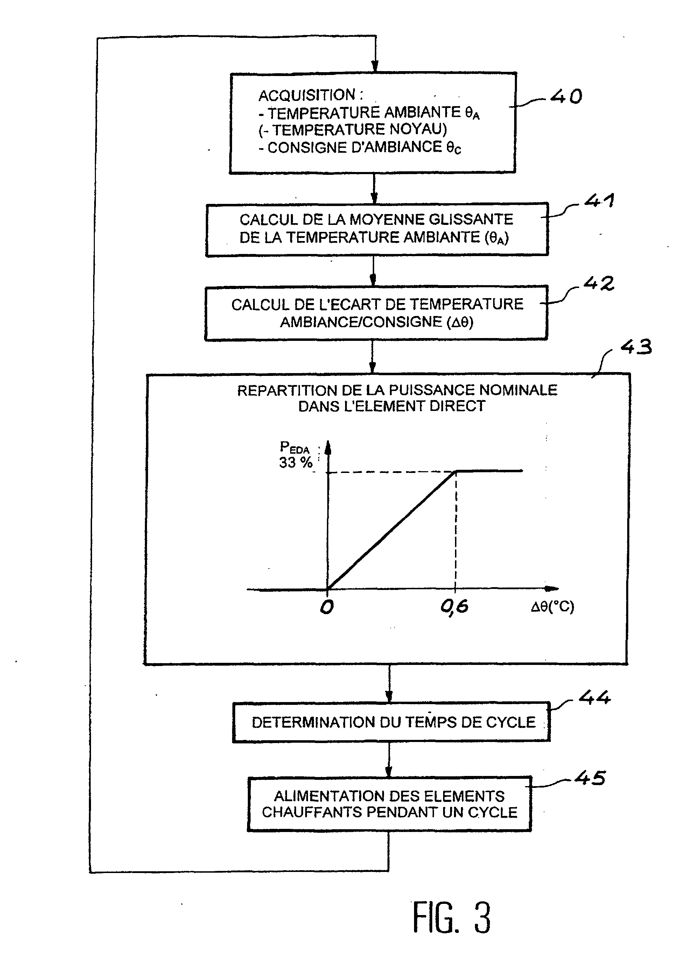

Pour ne pas perturber le réseau de distribution de l'énergie électrique, il est prévu d'alimenter simultanément le bloc accumulateur 20 et l'élément direct d'appoint 30 par des trains d'alternance complets. En d'autres termes, ces deux éléments reçoivent de l'énergie électrique à périodes régulières, en alternance, pour uniformiser la distribution de l'énergie sur une courte période de temps déterminée. La réalisation de cette commande est représentée par l'ordinogramme de la figure 3.

L'ordinogramme de la figure 3 permet de comprendre le déroulement d'un cycle de commande, d'après le procédé selon l'invention.

Dans la première étape, référencée 40, on procède à l'acquisition des données dans le microprocesseur, à savoir la température ambiante θ_{A} et la température de consigne θ_{C}. On peut éventuellement procéder à l'acquisition de la température du noyau du bloc accumulateur en vue de sa surveillance.

L'étape suivante, référencée 41, est facultative. Elle consiste à calculer la moyenne glissante de la température ambiante θ_{A}, dans le but d'anticiper sur la commande des deux éléments chauffants. La méthode d'anticipation choisie n'a pas d'importance, elle pourra être prise parmi les méthodes connues.

La troisième étape, référencée 42, consiste à calculer l'écart de température Δθ entre la température de consigne θ_{C} et la température ambiante θ_{A}.

La quatrième étape, référencée 43, consiste à calculer la puissance P_{EDA} à commander à l'élément direct d'appoint en fonction de la valeur de l'écart Δθ. Sur cet exemple d'ordinogramme, on a choisi le cas où l'écart minimum Δθₘᵢₙ, envisagé précédemment, est égal à 0. On se place également dans le cas où la puissance maximale P_{EDAmax} de l'élément direct d'appoint est égale à 33 % de la puissance nominale totale du radiateur.

La phase suivante, référencée 44, consiste à déterminer le temps du cycle de commande, en fonction du choix des trains d'alternance complets choisis pour commander les deux éléments chauffants.

Enfin, la dernière étape, référencée 45, consiste à alimenter, pendant un cycle, ces deux éléments chauffants qui sont l'élément direct d'appoint et le bloc accumulateur.

La répartition de la puissance électrique entre le bloc accumulateur et l'élément direct d'appoint est donc fonction donc de l'écart de la température de consigne θ_{C}, demandée par l'utilisateur et la température ambiante mesurée θ_{A}.

La répartition dans la distribution de l'énergie aux deux éléments chauffants permet de charger la ligne d'alimentation en électricité de façon uniforme, grâce aux trains d'alternance complets.

Ainsi, dans ce type de radiateur électrique à accumulation, la puissance dissipée par les différents éléments chauffants du radiateur est répartie de façon à optimiser l'émission calorifique du radiateur.

## Revendications

1. Procédé de commande d'un radiateur électrique à accumulation de type statique compensé comprenant :
- un bloc accumulateur (20) constitué lui-même de :
. un noyau de briques réfractaires denses (21) ;
. des résistances électriques chauffantes (22) ; ; et
. une enveloppe isolante entourant le noyau ;
- un élément direct d'appoint (30) ; ; et
- un moyen de commande (10) pour répartir la puissance électrique à fournir au bloc accumulateur (20) et à l'élément direct d'appoint (30) en fonction d'une température ambiante (θ_{A}) et d'une température de consigne (θ_{C}),
**caractérisé en ce que** les moyens de commande (10) agissent selon les règles suivantes :
- lorsque Δθ = θ_{C} - θ_{A} > Δθₘₐₓ, Δθₘₐₓ étant un écart maximal déterminé, l'élément direct d'appoint (30) est commandé à sa puissance maximale, tandis que le bloc accumulateur (20) complète l'élément direct d'appoint (30) pour que la puissance nominale du radiateur soit atteinte ;
- lorsque Δθ = θ_{C} - θ_{A} < 0, le radiateur est coupé ; et
- lorsque 0 < Δθ = θC - θ_{A} < Δθₘₐₓ, la puissance P_{EDA} de l'élément direct d'appoint est égale à A.Δθ, A étant une constante, le bloc accumulateur (20) est commandé pour compléter en puissance l'élément direct d'appoint (30) pour que la puissance nominale du radiateur soit atteinte.

2. Procédé selon la revendication 1, **caractérisé en ce que** lorsque 0 < Δθ = θ_{C} - θ_{A} < Δθₘᵢₙ, Δθₘᵢₙ étant un écart minimum déterminé, le bloc accumulateur (20) est commandé à sa puissance maximale, tandis que l'élément direct d'appoint (30) est coupé.

3. Procédé selon la revendication 1, **caractérisé en ce que** la puissance maximale de l'élément direct d'appoint (30) est égale à 0,33 fois la puissance nominale du radiateur.

4. Procédé selon la revendication 1, **caractérisé en ce que** la commande du bloc accumulateur (20) et de l'élément direct d'appoint (30) se fait par des trains d'alternance complets.

5. Radiateur électrique à accumulation de type statique compensé pour la mise en oeuvre du procédé selon la revendication 1, comprenant :
- un élément direct d'appoint (30) ; et
- un bloc accumulateur (20),
**caractérisé en ce qu'**il comprend un microprocesseur (20) recevant la température de consigne θ_{C} et la température d'ambiance θ_{A} pour commander l'élément direct d'appoint (30) et le bloc accumulateur (20), agissant selon les règles suivantes :
- lorsque Δθ = θ_{C} - θ_{A} > Δθₘₐₓ, Δθₘₐₓ étant un écart maximal déterminé, l'élément direct d'appoint (30) est commandé à sa puissance maximale, tandis que le bloc accumulateur (20) complète l'élément direct d'appoint (30) pour que la puissance nominale du radiateur soit atteinte ;
- lorsque Δθ = θ_{C} - θ_{A} < 0, le radiateur est coupé ; et
- lorsque 0 < Δθ = θ_{C} - θ_{A} < Δθₘₐₓ, la puissance P_{EDA} de l'élément direct d'appoint est égale à A.Δθ, A étant une constante, le bloc accumulateur (20) est commandé pour compléter en puissance l'élément direct d'appoint (30) pour que la puissance nominale du radiateur soit atteinte.

## Claims

1. Method for controlling an electric storage heater of the compensated static type comprising :
- a storage block (20) itself comprising :
a core of dense refractory bricks (21); electric heating resistors (22); and an isolating sheath surrounding the core;
- a direct auxiliary element (30); and
- control means (10) for dividing the electric power to be supplied to the storage block (20) and the direct auxiliary element (30) according to an ambient temperature (θ_{A}) and an instructed temperature (θ_{C}),
**characterised in that** the control means (10) act according to the following rules:
- when Δθ = θ_{C}-θ_{A} > Δθ ₘₐₓ, Δθ ₘₐₓ being a determined maximum difference, the direct auxiliary element (30) is controlled to its maximum power, while the storage block (20) supplements the direct auxiliary element (30) so that nominal power of the heater is achieved;
- when Δθ = θ_{C} - θ_{A} < 0, the heater is switched off; and
- when 0 < Δθ = θ_{C} - θ_{A} < Δθₘₐₓ, the power P_{EDA} of the direct auxiliary element is equal to A. Δθ, A being a constant, the storage block (20) is controlled to supplement the power of the direct auxiliary element (30) so that nominal power of the heater is achieved.

2. Method according to claim 1, **characterised in that** when 0 < Δθ = θ_{C} - θ_{A} < Δθₘᵢₙ, Δθₘᵢₙ being a determined minimum difference, the storage block (20) is controlled to its maximum power while the direct auxiliary element (30) is switched off.

3. Method according to claim 1, **characterised in that** the maximum power of the direct auxiliary element (30) is equal to 0.33 times the nominal power of the heater.

4. Method according to claim 1, **characterised in that** control of the storage block (20) and of the direct auxiliary element (30) takes place in complete alternating cycles.

5. Electric storage heater of the compensated static type for the implementation of the method according to claim 1, comprising :
- a direct auxiliary element (30); and
- a storage block (20),
**characterised in that** it includes a microprocessor (20) receiving the instructing temperature θ_{C} and the ambient temperature θ_{A} to control the direct auxiliary element (30) and the storage block (20) acting according to the following rules:
- when Δθ = θ_{C} - θ_{A} > Δθ ₘₐₓ, Δθ ₘₐₓ being a determined maximum difference, the direct auxiliary element (30) is controlled to its maximum power, while the storage block (20) supplements the direct auxiliary element (30) so that nominal power of the heater is achieved;
- when Δθ = θ_{C}- θ_{A} < 0, the heater is switched off;
- when 0 < Δθ = θ_{C} - θ_{A} < Δθ ₘₐₓ the power P_{EDA} of the direct auxiliary element is equal to A.Δθ, A being a constant, the storage block (20) is controlled to supplement the power of the direct auxiliary element (30) so that nominal power of the heater is achieved.

## Patentansprüche

1. Verfahren zur Steuerung eines elektrischen Speicherheizkörpers vom statisch ausgeglichenen Typ, mit:
- einem Speicherblock (20), der wiederum besteht aus:
. einem Kern dichter, feuerfester Ziegel (21),
. elektrischen Heizwiderständen (22) und
. einem den Kern umgebenden isolierenden Mantel,
- einem direkten Zusatz- bzw. Ergänzungselement (30), und
- einem Steuermittel (10) zum Verteilen der dem Speicherblock (20) und dem direkten Zusatzelement (30) in Abhängigkeit von einer Umgebungstemperatur (θ_{A}) und einer Solltemperatur (θ_{C}) zuzuführenden elektrischen Energie,
**dadurch gekennzeichnet, daß** das Steuermittel (10) nach folgenden Regeln funktioniert:
- wenn Δθ = θ_{C} - θ_{A} > Δθₘₐₓ, wobei Δθₘₐₓ eine bestimmte maximale Abweichung ist, wird das direkte Zusatzelement (30) auf seine Höchstleistung gesteuert, während der Speicherblock (20) das direkte Zusatzelement (30) vervollständigt, damit die Nennleistung des Heizkörpers erreicht wird,
- wenn Δθ = θ_{C} - θ_{A} < 0 ist, wird der Heizkörper abgeschaltet, und
- wenn 0 < Δθ = θ_{C} - θ_{A} < Δθₘₐₓ ist, ist die Leistung P_{EDA} des direkten Zusatzelements gleich A.Δθ, wobei A eine Konstante ist, und der Speicherblock (20) wird so gesteuert, daß er in der Leistung das direkte Zusatzelement (30) vervollständigt, damit die Nennleistung des Heizkörpers erreicht wird.

2. Verfahren nach Anspruch 1, **dadurch gekennzeichnet, daß**, wenn 0 < Δθ = θ_{C} - θ_{A} < Δθₘᵢₙ, wobei Δθₘᵢₙ eine bestimmte minimale Abweichung ist, der Speicherblock (20) auf seine Höchstleistung gesteuert wird, während das direkte Zusatzelement (30) abgeschaltet wird.

3. Verfahren nach Anspruch 1, **dadurch gekennzeichnet, daß** die Höchstleistung des direkten Zusatzelements (30) das 0,33-fache der Nennleistung des Heizkörpers ist.

4. Verfahren nach Anspruch 1, **dadurch gekennzeichnet, daß** die Steuerung des Speicherblocks (20) und des direkten Zusatzelements (30) in kompletten alternierenden Zeitabläufen erfolgt.

5. Elektro-Speicherheizkörper vom statisch ausgeglichenen Typ für die Anwendung des Verfahrens gemäß Anspruch 1, mit:
- einem direkten Zusatzelement (30), und
- einem Speicherblock (20),
**dadurch gekennzeichnet, daß** er einen Mikroprozessor 20 umfaßt, der die Solltemperatur θ_{C} und die Umgebungstemperatur θ_{A} empfängt, um das direkte Zusatzelement (30) und den Speicherblock (20) zu steuern, der gemäß den folgenden Regeln funktioniert:
- wenn Δθ = θ_{C} - θ_{A} > Δθₘₐₓ ist, wobei Δθₘₐₓ eine bestimmte maximale Abweichung ist, wird das direkte Zusatzelement (30) auf seine Höchstleistung gesteuert, während der Speicherblock (20) das direkte Zusatzelement (30) vervollständigt, damit die Nennleistung des Heizkörpers erreicht wird,
- wenn Δθ = θ_{C} - θ_{A} < 0 ist, wird der Heizkörper abgeschaltet, und
- wenn 0 < Δθ = θ_{C} - θ_{A} < Δθₘₐₓ ist, ist die Leistung P_{EDA} des direkten Zusatzelements gleich A.Δθ, wobei A eine Konstante ist und der Speicherblock (20) wird so gesteuert, daß er in der Leistung das direkte Zusatzelement (30) vervollständigt, damit die Nennleistung des Heizkörpers erreicht wird.
